# EUROPÄISCHE PATENTSCHRIFT

(11) **EP 2 558 230 B1**
(45) Veröffentlichungstag und Bekanntmachung des Hinweises auf die Patenterteilung: **14.05.2014**
(21) Anmeldenummer: 11715412.0
(22) Anmeldetag: 11.04.2011
(51) Int. Cl.: B21D 41/02

(54) **EXPANSIONSKOPF FÜR AUFWEITWERKZEUGE UND DIESEN UMFASSENDES EXPANSIONSWERKZEUG**
EXPANSION HEAD FOR EXPANSION TOOLS AND EXPANSION TOOL COMPRISING SAID EXPANSION HEAD
TÊTE D'EXPANSION POUR ÉLARGISSEURS, ET ÉLARGISSEUR COMPRENANT UNE TELLE TÊTE D'EXPANSION

(30) Priorität: 13.04.2010 DE 202010004948 U
(43) Veröffentlichungstag der Anmeldung: 20.02.2013
(73) Patentinhaber: Rehau AG + Co, 95111 Rehau (DE)
(72) Erfinder: BÄRTHLEIN, Sebastian, 91052 Erlangen (DE); SAPPER, Richard, 91126 Schwabach (DE); WOLTER, Daniel, 88525 Dürmentingen (DE)
(86) Internationale Anmeldenummer: PCT/EP2011/001782
(87) Internationale Veröffentlichungsnummer: WO 2011/128049

(56) Entgegenhaltungen:
- EP-A2- 0 044 795
- EP-A2- 0 499 094
- DE-C1- 4 202 348
- FR-A1- 2 304 420
- FR-A1- 2 645 052

## Beschreibung

Die vorliegende Erfindung betrifft einen Expansionskopf für Aufweitwerkzeuge für hohle Werkstücke, insbesondere für die Enden von Rohren aus Kunststoffen und aus mit Kunststoffen überzogenen Metallen.

Derartige Aufweitköpfe sind aus dem Stand der Technik bekannt.

Beispielsweise beschreibt die EP 0 044 795 A2 einen derartigen Expansionskopf mit einer Überwurfkappe und einer Vielzahl von durch ein elastisches Haltemittel verbundenen, in der Überwurfkappe drehbar angeordneten, konzentrischen, sektorförmigen Backen. Beim Aufweiten von Rohren neigen derartige drehbar angeordnete, konzentrische Backensektoren zum Verkanten der einzelnen Segmente und so zu einem ungleichmäßigen Aufweitbild, da die Segmente durch eine Rotationsbewegung des Kopfes örtlich verschoben werden können. Im Extremfall können aufgrund der Rotationsbewegung die Segmente unmittelbar nebeneinander angeordnet sein und damit ein uneinheitliches Aufweitbild erzeugen. Insbesondere beim Aufweiten von dünnwandigen Mehrschichtverbundrohren/Polymerrohren können erhebliche Längsriefen durch Einschneiden der Segmentkanten in den Rohrwerkstoff entstehen, was zu einer erheblichen Schwächung des Rohrwerkstoffes und damit zu einer Schwachstelle für die spätere Verbindung sorgt. Aufgrund der sektorförmigen Ausbildung der Segmente kommt es beim Aufweitvorgang zu einem ungleichmäßigen Aufweitbild (Polygon), was das Einstecken der Verbindungstechnik (bspw. eines Fittings) behindert. Aus diesem Grund ist nach dem ersten Aufweitvorgang ein zweiter Aufweitvorgang mit einer Verdrehung der Segmente bzw. des Kopfes erforderlich, um ein im Wesentlichen gleichförmiges Aufweitbild zu erreichen. Beim zweiten Aufweiten ist der Aufweitkopf dabei so positionieren, dass der Aufweitsteg, der durch den Abstand zwischen den Spaltbacken im expandierten Zustand im Rohrwerkstoff erzeugt wurde, durch die Segmentbreite im zweiten Aufweitvorgang überdeckt wird.

Dies ist in der Praxis aber durch die nicht in der Überwurfkappe fixierten Segmente sehr schwierig, insbesondere weil die Segmente ggf. an den Aufweitstegen hängen bleiben und daher die Positionen der einzelnen Segmente relativ zum Rohr kaum oder überhaupt nicht verändert wird. Dies führt ebenfalls zu erheblichen Längsriefen, die die Verbindungsqualität negativ beeinflussen.

Zur Verbesserung des Spaltbilds beschreibt die DE 42 02 348 C1 einen Expansionskopf für Aufweitwerkzeuge für hohle Werkstücke, insbesondere für die Enden von Rohren aus Kunststoffen und aus mit Kunststoffen überzogenen Metallen mit einer Überwurfkappe mit einem radial einwärts gerichteten Führungsflansch und mit einem Satz von sektorförmig ausgebildeten Spreizbacken, die jeweils einzeln mit einem Innenflanschsektor und einem Außenflanschsektor und einer zwischen diesen gebildeten radialen Nut radial beweglich auf dem Führungsflansch geführt sind, wobei auf den Innenflanschsektoren ringförmige Zugfedern für die Rückführung der Spreizbacken in komplementären Nutsektoren angeordnet sind und wobei die Außenflanschsektoren im Wesentlichen den gleichen Durchmesser aufweisen wie die Innenflanschsektoren und in den Innenflanschsektoren Bohrungen angeordnet sind, in denen die einen Enden von Führungsstiften aufgenommen sind, und wobei in dem Führungsflansch radiale Führungsnuten für die Aufnahme und die Bewegung der Führungsstifte, wobei auch die Außenflanschsektoren Bohrungen aufweisen, in die die anderen Enden der Führungsstifte aufgenommen sind, die Führungsstifte mit Presssitz in mindestens einer der beiden zugehörigen Bohrungen und auch auf den Außenflanschsektoren ringförmige Zugfedern für die Rückstellung der Spreizbacken in komplementären Nutsektoren angeordnet sind. Bedingt durch den aufwendigen Aufbau (Außenflanschsektor und Innenflanschsektor) gibt es folgende Nachteile. Ein deratiger Expansionskopf besitzt aufgrund der notwendigen Höhe des Außenflanschsektors eine große freie Segmentlänge, d.h. eine große Länge des Teils des Expansionskopfes, der über den Führungsflansch der Überwurfkappe hinausragt. Insbesondere bei Stufenaufweitköpfen (Expansionsköpfe, die zum Aufweiten von Rohren mit unterschiedlichen Durchmesser geeignet sind) und bei Aufweitköpfen für große Rohrdurchmesser kann diese große freie Segmentlänge zu einem Verkippen der Segmente führen. Ein derartiges Verkippen der einzelnen Segmente zieht wiederum ein unsymmetrisches bzw. ungleichmäßiges Aufweitbild nach sich, was zufolge hat. Insbesondere beim Aufweiten von dünnwandigen Mehrschichtverbundrohren/Polymerrohren kann das Verkippen der Segmente Längsriefen verursachen, die sich über die gesamte Aufweitlänge erstrecken. Damit beschreibt die DE 42 02 348 C1 einen Expansionskopf mit den Merkmalen des Oberbegriffs des Patentanspruchs 1.

Solche Längsriefen stellen aber potenzielle Schwachstellen bei den verschieden Verbindungstechniken (Axial-/Radialpressverbindungen und Steckfittinge) dar.

Damit besteht die Aufgabe der vorliegenden Erfindung darin, einen Expansionskopf für Aufweitwerkzeuge für hohle Werkstücke zur Verfügung zu stellen, der die Nachteile des Stands der Technik überwindet. Insbesondere soll der erfindungsgemäße Expansionskopf die Bildung von Längsriefen im Werkstoff des Werkstücks während des Aufweitvorganges weitgehend verhindert werden. Darüber hinaus soll der erfindungsgemäße Expansionskopf beim Aufweitvorgang ein gleichmäßiges und symmetrisches Aufweitbild gewährleisten.

Diese und andere Aufgaben werden durch einen Expansionskopf für Aufweitwerkzeuge für hohle Werkstücke, insbesondere für die Enden von Rohren aus Kunststoffen und aus mit Kunststoffen überzogenen Metallen, mit den Merkmalen des Anspruchs 1 bzw. durch ein Aufweitwerkzeug für hohle Werkstücke gemäß Anspruch 10 gelöst. Bevorzugte Ausführungsformen des erfindungsgemäßen Expansionskopfes sind in den davon abhängigen Ansprüchen beschrieben.

Gemäß der vorliegenden Erfindung wurde erkannt, dass bei Weglassen von Außenflanschbereichen an den sektorförmig ausgebildeten Spreizbacken eine sichere Führung der sektorförmig ausgebildeten Spreizbacken durch jeweils einen Innenflanschsektor, der mit dem Führungsflansch der Überwurfkappe überlappt, und durch jeweils eine radiale Nut auf dem Führungsflansch erzielt wird, wodurch die Bildung von Längsriefen in dem Werkstoff des hohlen Werkstücks beim Aufweitvorgang vermieden werden können. Durch das Weglassen der Außenflanschbereiche gegenüber dem in der DE 42 02 348 C1 beschriebenen Expansionskopf und einer maximalen Erstreckung der Führungsstifte bis an die Auβenseite des Führungsflansches wird ein Expansionskopf mit einer kompakten Bauform, d.h. einer geringen freie Segmentlänge, erhalten. Dadurch ist die Gefahr eines Verkippens der sektorförmig ausgebildeten Spreizbacken minimiert. Deshalb und aufgrund der sicheren Führung der sektorförmig ausgebildeten Spreizbacken ist gleichmäßiges und symmetrisches Aufweitbild des erfindungsgemäßen Expansionskopfes sichergestellt.

Dementsprechend liegt die vorliegende Erfindung in einem Expansionskopf gemäß Anspruch 1.

Als "Aufweitbereich" wird hierin der Bereich des Expansionskopfes bezeichnet in dem sich beim Aufweitvorgang das aufzuweitende hohle Werkstück befindet. Dieses liegt dabei an der Außenseite der Spreizbacken an.

Darüber hinaus liegt die vorliegende Erfindung in einem Aufweitwerkzeug für hohle Werkstücke, insbesondere für die Enden von Rohren aus Kunststoffen und aus mit Kunststoffen überzogenen Metallen, der einen erfindungsgemäßen Expansionskopf umfasst.

In Bezug auf den erfindungsgemäßen Expansionskopf kann es von Vorteil sein, wenn die feste Verbindung der einen Enden der Führungsstifte mit den Innenflanschsektoren derart ausgebildet ist, dass in den Innenflanschsektoren jeweils eine Bohrung angeordnet ist, in der jeweils ein Ende eines Führungsstifts aufgenommen ist. Dabei kann es sich als besonders günstig erweisen, wenn das eine Ende des jeweiligen Führungsstifts mit Presssitz in der zugehörigen Bohrung in dem Innenflanschsektor festgelegt ist, über ein Gewinde mit der zugehörigen Bohrung in dem jeweiligen Innenflanschsektor eingeschraubt oder mit der zugehörigen Bohrung in dem jeweiligen Innenflanschsektor verstiftet ist. Eine derartige Verbindung der Führungsstifte mit den Innenflanschsektoren hat sich in der Praxis als besonders stabil bei kostengünstiger Herstellung erwiesen. Alternativ dazu kann es auch von Nutzen sein, wenn das eine Ende der jeweiligen Führungsstifte einstückig an den Innenflanschsektor angeformt ist.

Es kann auch hilfreich sein, wenn die Spreizbacken durch ein Befestigungsmittel in axialer Richtung in der Überwurfkappe festgelegt sind. Durch die Befestigung der sektorförmig ausgebildeten Spreizbacken in der Überwurfkappe bzw. Haltemutter über ein Befestigungsmittel können Fertigungstoleranzen und damit das Spiel der sektorförmig ausgebildeten Spreizbacken optimiert und/oder eingestellt werden. Da bei hat sich die Verwendung einer in die Überwurfkappe eingepressten Befestigungsscheiben, einer Gewindescheibe oder eines Sicherungsrings als das Befestigungsmittel als besonders nützlich erwiesen. Gerade bei der Verwendung einer in ein Innengewinde der Überwurfkappe eingesetzte Gewindescheibe kann die Vorspannung der Spreizbacken in der Überwurfkappe besonders exakt eingestellte und dadurch optimiert werden.

Es kann auch günstig sein, wenn das ringförmige Rückführmittel eine ringförmige Zugfeder oder ein elastischer O-Ring ist. Derartige Rückführungsmittel sind kostengünstig und gewährleisten eine sichere Rückführung der sektorförmig ausgebildeten Spreizbacken.

Darüber hinaus kann es sich als günstig erweisen, wenn die Spreizbacken jeweils eine Verlängerung aufweisen, so dass sich Kegelsegmentflächen an der Innenseite der Spreizbacken über die Innenflanschsegmente hinaus in die Überwurfkappe erstrecken. Durch diese Maßnahme wird das Risiko des Verkippens der Spreizbacken weiter verringert. Darüber hinaus wird dadurch ein Auseinanderklaffen der Spreizbacken während der Einführungsphase eines Spreizdorns eines Aufweitwerkzeugs bei unbelasteten Spreizbacken, d.h. ohne über die Spreizbacken gezogenes hohles Werkstück (Rohr), vermieden. Damit wird das Aufbringen des hohlen Werkstücks auf die Spreizbacken erleichtert.

Es kann auch hilfreich sein, wenn die Spreizbacken an ihrer der Überwurfkappe abgewandten Seite eine Verjüngung aufweisen. Dadurch kann ein gleichmäßiger Übergang zwischen dem aufgeweiteten und dem nicht aufgeweiteten Teil des hohlen Werkstücks nach dem Aufweitvorgang erzielt werden.

Im Folgenden soll die vorliegende Erfindung unter Bezugnahme auf die in den Figuren dargestellte Ausführungsform im Detail erläutert werden.

### Kurze Beschreibung der Zeichnungen

- Figur 1: zeigt eine Draufsicht auf einen Expansionskopf gemäß einer Ausführungsform der vorliegenden Erfindung im geschlossenen Zustand.
- Figur 2: zeigt eine Schnittdarstellung des in Fig. 1 dargestellten Expansionskopfes entlang der Linie A-A mit Blick in Pfeilrichtung.
- Figur 3: zeigt eine Draufsicht auf den in Fig. 1 dargestellten Expansionskopf im geöffneten Zustand.
- Figur 4: zeigt eine Schnittdarstellung des in Fig. 3 dargestellten Expansionskopfes entlang der Linie A-A mit Blick in Pfeilrichtung.
- Figur 5: zeigt eine Schnittdarstellung der Spreizbacken des in Fig. 1 dargestellten Expansionskopfes entlang der Linie A-A mit Blick in Pfeilrichtung.

### Detaillierte Beschreibung bevorzugter Ausführungsformen

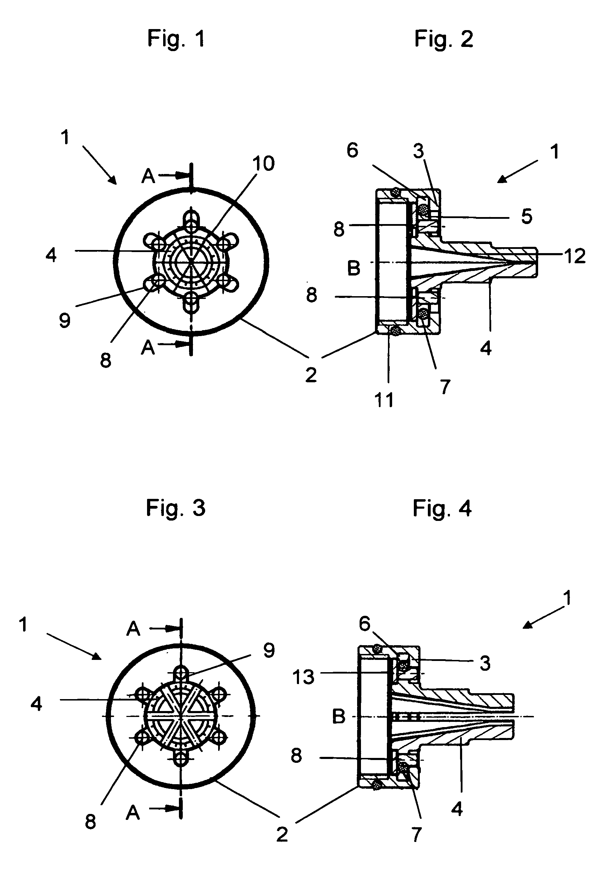

In den Figuren ist ein Expansionskopf gemäß einer Ausführungsform der vorliegenden Erfindung im geschlossenen Zustand (Fig. 1 und 2) und im geöffneten Zustand (Fig. 3 und 4) gezeigt.

Der erfindungsgemäße Expansionskopf 1 umfasst eine Überwurfkappe 2 mit einem radial einwärts gerichteten Führungsflansch 3 und einen Satz von sektorförmig ausgebildeten Spreizbacken 4. Zusammen ergibt der Satz von sektorförmig ausgebildeten Spreizbacken 4 im geschlossenen Zustand des Expansionskopfes 1 eine geschlossene Form mit einer im Wesentlichen zylindrischen Form im Aufweitbereich des Expansionskopfes 1.

In bevorzugten Ausführungsformen der vorliegenden Erfindung weisen die Spreizbacken 4 in ihrem von der Überwurfkappe 2 entfernten Bereich eine Ausnehmung auf, woraus im geschlossenen Zustand des Expansionskopfes ein Zylinder mit einem geringeren Durchmesser resultiert als der Zylinder in dem der Überwurfkappe 2 benachbarten Bereich der Spreizbacken 4.

Dadurch kann der erfindungsgemäße Expansionskopf 1 als Stufenexpansionskopf, also zum Aufweiten von Rohren mit zwei unterschiedlichen Rohrdurchmessern (beispielsweise 16 mm und 20 mm) eingesetzt werden.

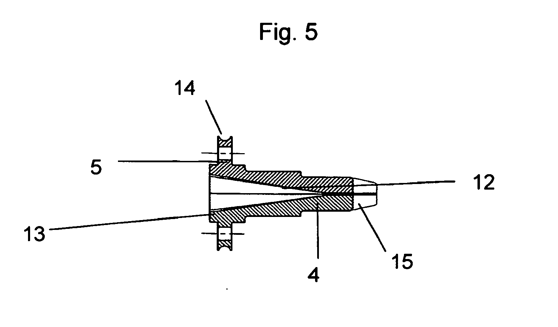

Jeder der sektorförmig ausgebildeten Spreizbacken 4 ist einzeln durch einen Innenflanschsektor 5, der mit dem Führungsflansch (3) überlappt, und eine radiale Nut 6 in der Überwurfkappe 2 radial beweglich auf dem Führungsflansch 3 geführt. Die Innenflanschsektoren 5 weisen auf ihren Außenseiten Nutsektoren 14 auf (Fig. 5). Die Nutsektoren 14 ergänzen sich im Gesamtumfang des Expansionskopfes 1 zu einer umlaufenden Nut an der Außenseite der Innenflanschsektoren 5, in die ein ringförmiges Rückführmittel 7 für die Rückführung der Spreizbacken 4 vom geöffneten in den geschlossenen Zustand des Expansionskopfes 1 aufgenommen ist. Die Rückführmittel ist dabei bevorzugt so gewählt, dass seine Rückstellkraft für die Rückführung der Spreizbacken 4 vom offenen in den geschlossenen Zustand ausreichend ist. In der dargestellten Ausführungsform handelt es sich bei dem Rückführmittel 7 um eine ringförmige Zugfeder 7. Alternativ kann auch ein elastischer O-Ring in vorteilhafter Weise eingesetzt werden. In jedem der Innenflanschsektoren 5 befindet sich eine Bohrung, in der jeweils ein Ende eines Führungsstifts 8 aufgenommen ist.

In dem Führungsflansch 3 sind radiale Führungsnuten 9 für die Aufnahme und die Bewegung der Führungsstifte 8 angeordnet. Die Anzahl der Führungsnuten 9 entspricht dabei der Anzahl der Führungsstifte 8 und damit der Anzahl der Spreizbacken 4 des Expansionskopfes 1. Die Führungsstifte 8 sind jeweils mit Presssitz in der zugehörigen Bohrung in den Innenflanschsektoren 5 fest mit den Innenflanschsektoren 5 verbunden, wobei die Führungsstifte 8 jeweils parallel zur Achse B verlaufen (Fig. 2 und Fig. 4). In alternativen Ausführungsformen des erfindungsgemäßen Expansionskopfes 1 können jeweils das eine Ende der Führungsstifte 8 in eine Gewinde in der Bohrung eingeschraubt oder mit dem Innenflanschsektor 5 verstiftet sein. Weiterhin hinaus können die Führungsstifte 8 auch einstückig an den jeweiligen Innenflanschsektor 5 angeformt sein. Auch in diesen Ausführungsformen verlaufen die Führungsstifte 8 jeweils parallel zur Achse B. Die anderen Enden der Führungsstifte 8 stehen nicht über die dem Arbeitsbereich der Spreizbacken 4 zugewandte Seite des Führungsflansches 3 hinaus. Dies führt zu einer kompakten Bauweise des erfindungsgemäßen Expansionskopfes 1, wodurch die Gefahr eines Verkippens der Spreizbacken 4 verringert wird.

An ihrer Innenseite weist die Überwurfkappe 2 ein Gewinde 11 auf, durch das der erfindungsgemäße Expansionskopf 1 über komplementäres Außengewinde auf ein Aufweitwerkzeug aufgeschraubt werden kann. Das Aufweitwerkzeug ist im Prinzip ein Werkzeug mit manuellem oder elektrischen Antrieb, durch den ein Spreizdorn in axialer Richtung angetrieben wird. Der Spreizdorn weist dabei die Form eines Kegels mit einem bestimmten Kegelwinkel auf.

Zur axialen Festlegung der Spreizbacken 4 in der Überwurfkappe 2 dient ein Befestigungsmittel. In der in den Figuren dargestellten Ausführungsform des erfindungsgemäßen Expansionskopfes ist eine in die Überwurfkappe 2 eingepresste Befestigungsscheibe 13 als Befestigungsmittel für die Spreizbacken 4 eingesetzt. In alternativen Ausführungsformen kann ein Sicherungsring, eine Scheibe mit einem Sicherungsring oder eine Gewindescheibe, die in ein in ein Gewinde an der Innenseite der Überwurfkappe 2 eingebracht ist, als Befestigungsmittel zum Einsatz kommen.

Die Spreizbacken 4 sind durch Zerlegen (Zersägen) eines rotationssymmetrischen Körpers mit der Achse B entlang der Spalte 10 hergestellt. In der in den Figuren dargestellten Ausführungsform wurde der Körper in sechs gleiche Segmente zerlegt, die die Spreizbacken 4 bilden (Fig. 2).

An ihrer Innenseite sind die Spreizbacken 4 durch Kegelsegmentflächen 12 begrenzt, die sich im geschlossenen Zustand des Expansionskopfes 1 zu einer Kegelfläche ergänzen.

Der Öffnungswinkel der Kegelsegmentflächen 12 entspricht dabei dem Kegelwinkel des Spreizdorns des Aufweitwerkzeuges. Daher wirkt die Kegelfläche des Spreizdorns beim Aufweitvorgang mit den Kegelsegmentflächen 12 der Spreizbacken 4 zusammen. Durch Eintreiben des Spreizdorns in den Expansionskopf schiebt die Kegelfläche des Spreizdorns die Kegelsegmentflächen 11 der Spreizbacken radial nach außen. Ist über die Außenflächen des Expansionskopfes 1 ein hohles Werkstück, beispielsweise ein Kunststoffrohr, geführt, liegen die Außenflächen des Expansionskopfes 1 zunächst an der Rohrinnenseite an. Mit zunehmender Eindringtiefe des Spreizdorns werden die Außenflächen der Spreizbacken 4 radial nach außen bewegt, wodurch das Rohrende, das über die Spreizbacken 4 geführt ist, aufgeweitet wird.

In ihrem in der Überwurfkappe 2 befindlichen Teil weisen die Spreizbacken 4 jeweils eine Verlängerung 13 auf, so dass sich die Kegelsegmentflächen 12 an der Innenseite der Spreizbacken 4 über die Innenflanschsegmente 5 hinaus in die Überwurfkappe 2 erstrecken. Um das Risiko der Bildung von Längsriefen in dem aufgeweiteten Werkstück zu verringern, können die äußeren Kanten in Längsrichtung der Spreizbacken 4 abgerundet oder angefast sein.

In bevorzugten Ausführungsformen der vorliegenden Erfindung besitzen die Spreizbacken 4 an ihrer der Überwurfkappe 2 abgewandten Bereich eine Verjüngung 15. Durch eine derartige Verjüngung kann ein gleichmäßiger Übergang zwischen dem aufgeweiteten und dem nicht aufgeweiteten Teil des hohlen Werkstücks nach dem Aufweitvorgang erzielt werden.

## Patentansprüche

1. Expansionskopf (1) für Aufweitwerkzeuge für hohle Werkstücke, insbesondere für die Enden von Rohren aus Kunststoffen und aus mit Kunststoffen überzogenen Metallen, umfassend:
- eine Überwurfkappe (2) mit einem radial einwärts gerichteten Führungsflansch (3),
- einen Satz von sektorförmig ausgebildeten Spreizbacken (4), die jeweils einzeln durch einen Innenflanschsektor (5), der mit dem Führungsflansch (3) überlappt, geführt sind, wobei
• auf den Innenflanschsektoren (5) ein ringförmiges Rückführmittel (7) für die Rückführung der Spreizbacken (4) in komplementären Nutsektoren (14) auf den Innenflanschsektoren (5) angeordnet ist,
• jeder der Innenflanschsektoren (5) mit einem Ende jeweils eines Führungsstifts (8) fest verbunden ist,
• in dem Führungsflansch (3) radiale Führungsnuten (9) für die Aufnahme und die Bewegung der Führungsstifte (8) angeordnet sind,
**dadurch gekennzeichnet, dass**
• die Spreizbacken (4) in einer radialen Nut (6) in der Überwurfkappe (2) radial beweglich am Führungsflansch (3) geführt sind, und
• die anderen Enden der Führungsstifte (8) nicht über die dem Aufweitbereich der Spreizbacken (4) zugewandte Seite der Überwurfkappe (2) hinausragen.

2. Expansionskopf (1) nach Anspruch 1, **dadurch gekennzeichnet, dass** die feste Verbindung der einen Enden der Führungsstifte (8) mit den Innenflanschsektoren (5) derart ausgebildet ist, dass in den Innenflanschsektoren (5) jeweils eine Bohrung angeordnet ist, in der jeweils ein Ende eines Führungsstifts (8) aufgenommen ist.

3. Expansionskopf (1) nach Anspruch 2, **dadurch gekennzeichnet, dass** das eine Ende der jeweiligen Führungsstifte (8) mit Presssitz in der zugehörigen Bohrung in den Innenflanschsektor (5) festgelegt ist, über ein Gewinde mit der zugehörigen Bohrung in dem jeweiligen Innenflanschsektor (5) eingeschraubt oder mit der zugehörigen Bohrung in dem jeweiligen Innenflanschsektor (5) verstiftet ist.

4. Expansionskopf (1) nach Anspruch 1, **dadurch gekennzeichnet, dass** das eine Ende der jeweiligen Führungsstifte (8) einstückig an den Innenflanschsektor (5) angeformt ist.

5. Expansionskopf (1) nach einem der Ansprüche 1 bis 4, **dadurch gekennzeichnet, dass** die Spreizbacken (4) durch ein Befestigungsmittel in axialer Richtung in der Überwurfkappe (2) festgelegt sind.

6. Expansionskopf (1) nach Anspruch 5, **dadurch gekennzeichnet, dass** das Befestigungsmittel eine in die Überwurfkappe (2) eingepresste Befestigungsscheibe (13), eine Gewindescheibe oder ein Sicherungsring ist.

7. Expansionskopf (1) nach einem der Ansprüche 1 bis 6, **dadurch gekennzeichnet, dass** das ringförmige Rückführmittel (7) eine ringförmige Zugfeder oder ein elastischer O-Ring ist.

8. Expansionskopf (1) nach einem der Ansprüche 1 bis 7, **dadurch gekennzeichnet, dass** die Spreizbacken (4) jeweils eine Verlängerung (13) aufweisen, so dass sich Kegelsegmentflächen (12) an der Innenseite der Spreizbacken (4) über die Innenflanschsegmente (5) hinaus in die Überwurfkappe (2) erstrecken.

9. Expansionskopf (1) nach einem der Ansprüche 1 bis 8, **dadurch gekennzeichnet, dass** die Spreizbacken (4) an ihrer der Überwurfkappe (2) abgewandten Seite eine Verjüngung (15) aufweisen.

10. Aufweitwerkzeug für hohle Werkstücke, insbesondere für die Enden von Rohren aus Kunststoffen und aus mit Kunststoffen überzogenen Metallen, umfassend einen Expansionskopf (1) nach einem der Ansprüche 1 bis 9.

## Claims

1. Expansion head (1) for expansion tools for hollow workpieces, in particular for the ends of pipes made of plastics and made of metals covered with plastics, comprising:
- a union cap (2) with a radially inwardly directed guide flange (3),
- a set of sector-shaped expandable jaws (4) which are in each case individually guided by an inner flange sector (5) which overlaps with the guide flange (3), wherein
• on the inner flange sectors (5) an annular return means (7) for returning the expandable jaws (4) is arranged in complementary groove sectors (14) on the inner flange sectors (5),
• each of the inner flange sectors (5) is fixedly connected to an end of in each case a guide pin (8),
• radial guide grooves (9) for the accommodation and the movement of the guide pins (8) are arranged in the guide flange (3),
**characterized in that**
• the expandable jaws (4) are guided in a radial groove (6) in the union cap (2) in a radially movable manner on the guide flange (3), and
• the other ends of the guide pins (8) do not project beyond the side of the union cap (2) facing the expansion region of the expandable jaws (4).

2. Expansion head (1) according to Claim 1, **characterized in that** the fixed connection of the one ends of the guide pins (8) to the inner flange sectors (5) is designed in such a way that in each case a bore in which in each case an end of a guide pin (8) is accommodated is arranged in the inner flange sectors (5).

3. Expansion head (1) according to Claim 2, **characterized in that** the one end of the respective guide pins (8) is fixed with a press fit in the associated bore in the inner flange sector (5), is screwed in via a thread of the associated bore in the respective inner flange sector (5) or is pinned with the associated bore in the respective inner flange sector (5).

4. Expansion head (1) according to Claim 1, **characterized in that** the one end of the respective guide pins (8) is integrally formed on the inner flange sector (5).

5. Expansion head (1) according to one of Claims 1 to 4, **characterized in that** the expandable jaws (4) are fixed by a fastening means in the axial direction in the union cap (2).

6. Expansion head (1) according to Claim 5, **characterized in that** the fastening means is a fastening disc (13) pressed into the union cap (2), a threaded disc or a securing ring.

7. Expansion head (1) according to one of Claims 1 to 6, **characterized in that** the annular return means (7) is an annular tension spring or an elastic O-ring.

8. Expansion head (1) according to one of Claims 1 to 7, **characterized in that** the expandable jaws (4) in each case have an extension (13), with the result that conical segment surfaces (12) on the inner side of the expandable jaws (4) extend beyond the inner flange segments (5) into the union cap (2).

9. Expansion head (1) according to one of Claims 1 to 8, **characterized in that** the expandable jaws (4) have a taper (15) on their side facing away from the union cap (2).

10. Expansion tool for hollow workpieces, in particular for the ends of pipes made of plastics and made of metals covered with plastics, comprising an expansion head (1) according to one of Claims 1 to 9.

## Revendications

1. Tête d'expansion (1) pour élargisseurs pour des pièces creuses, en particulier pour les extrémités de tubes en plastiques et en métaux revêtus de plastiques, comprenant :
- une coiffe d'accouplement (2) avec une bride de guidage (3) orientée radialement vers l'intérieur,
- un ensemble de mâchoires d'écartement (4) réalisées en forme de secteurs, qui sont à chaque fois guidées individuellement par un secteur de bride intérieur (5) qui chevauche la bride de guidage (3),
- un moyen de retour de forme annulaire (7) étant disposé sur les secteurs de bride intérieurs (5) pour le retour des mâchoires d'écartement (4) dans des secteurs de rainure complémentaires (14) sur les secteurs de bride intérieurs (5),
- chacun des secteurs de bride intérieurs (5) étant connecté fixement à une extrémité d'une goupille de guidage respective (8),
- des rainures de guidage radiales (9) étant disposées dans la bride de guidage (3) pour recevoir et déplacer les goupilles de guidage (8),
**caractérisée en ce que**
- les mâchoires d'écartement (4) sont guidées dans une rainure radiale (6) dans la coiffe d'accouplement (2) de manière déplaçable radialement sur la bride de guidage (3), et
- les autres extrémités des goupilles de guidage (8) ne faisant pas saillie au-delà du côté de la coiffe d'accouplement (2) tourné vers la région d'élargissement des mâchoires d'écartement (4).

2. Tête d'expansion (1) selon la revendication 1, **caractérisée en ce que** la connexion fixe des premières extrémités des goupilles de guidage (8) aux secteurs de bride intérieurs (5) est réalisée de telle sorte qu'un alésage respectif soit disposé dans les secteurs de bride intérieurs (5), dans lequel alésage est à chaque fois reçue une extrémité d'une goupille de guidage (8).

3. Tête d'expansion (1) selon la revendication 2, **caractérisée en ce que** l'une des extrémités des goupilles de guidage respectives (8) est fixée avec ajustement serré dans l'alésage associé dans le secteur de bride intérieur (5), est vissée par le biais d'un filetage avec l'alésage associé dans le secteur de bride intérieur respectif (5) ou est goupillée à l'alésage associé dans le secteur de bride intérieur respectif (5).

4. Tête d'expansion (1) selon la revendication 1, **caractérisée en ce que** l'une des extrémités des goupilles de guidage respectives (8) est façonnée d'une seule pièce sur le secteur de bride intérieur (5).

5. Tête d'expansion (1) selon l'une quelconque des revendications 1 à 4, **caractérisée en ce que** les mâchoires d'écartement (4) sont fixées par un moyen de fixation dans la direction axiale dans la coiffe d'accouplement (2).

6. Tête d'expansion (1) selon la revendication 5, **caractérisée en ce que** le moyen de fixation est une rondelle de fixation (13) pressée dans la coiffe d'accouplement (2), une rondelle filetée ou une bague de fixation.

7. Tête d'expansion (1) selon l'une quelconque des revendications 1 à 6, **caractérisée en ce que** le moyen de retour de forme annulaire (7) est un ressort de traction de forme annulaire ou un joint torique élastique.

8. Tête d'expansion (1) selon l'une quelconque des revendications 1 à 7, **caractérisée en ce que** les mâchoires d'écartement (4) présentent chacune un prolongement (13), de telle sorte que des surfaces de segments coniques (12) s'étendent au niveau du côté intérieur des mâchoires d'écartement (4) au-delà des segments de bride intérieurs (5) dans la coiffe d'accouplement (2).

9. Tête d'expansion (1) selon l'une quelconque des revendications 1 à 8, **caractérisée en ce que** les mâchoires d'écartement (4) présentent un rétrécissement (15) au niveau de leur côté opposé à la coiffe d'accouplement (2).

10. Élargisseur pour pièces creuses, en particulier pour les extrémités de tubes en plastiques et en métaux revêtus de plastiques, comprenant une tête d'expansion (1) selon l'une quelconque des revendications 1 à 9.
